# EUROPÄISCHE PATENTANMELDUNG

(11) **EP 0 682 166 A1**
(43) Veröffentlichungstag der Anmeldung: **15.11.1995**
(21) Anmeldenummer: 95105971.6
(22) Anmeldetag: 21.04.1995
(51) Int. Cl.: E05B 49/00, B60R 25/00

(54) **Funkfernbedienbare Sicherungseinrichtung für Kraftfahrzeuge**

(30) Priorität: 29.04.1994 DE 4415019
(71) Anmelder: Hella KG Hueck & Co., D-59552 Lippstadt (DE)
(72) Erfinder: Langer, Michael, D-33154 Salzkotten (DE); Neuhaus, Friedrich, D-58739 Wickede (DE)

(57) **Zusammenfassung**

Bei einer funkfernbedienbaren Sicherungseinrichtung für Kraftfahrzeuge, mit einem Radiofrequenzsender (5), der mindestens eine Bedienungstaste (T) aufweist und der ein codiertes Radiofrequenzsignal (RF) abhängig von der Betätigung der Bedienungstaste aussendet, mit einem Radiofrequenzempfänger (E), der das ausgesandte Radiofrequenzsignal empfängt und den darin enthaltenen Code mit einem im Radiofrequenzempfänger abgelegten Code vergleicht und der im Fall der Codeübereinstimmung ein Steuersignal an ein Steuergerät (ST) zur Steuerung von Sicherungsfunktionen des Kraftfahrzeuges ausgibt, weist das Steuergerät zum Schutz des Kraftfahrzeuges gegen unbefugte Bedienung bei ungewollter Betätigung der Bedienungstaste ein Zeitglied (Z) auf, das Signale von Bedienteilen des Kraftfahrzeuges empfängt. Nach Empfang eines Steuersignals vom Empfänger zur Aufhebung der Sicherungsfunktion stellt das Steuergerät die Sicherungsfunktion selbsttätig wieder her, wenn innerhalb der durch das Zeitglied vorgegebenen Zeitdauer kein Signal von den Bedienteilen des Kraftfahrzeuges empfangen wird.

## Beschreibung

Die Erfindung betrifft eine funkfernbedienbare Sicherungseinrichtung für Kraftfahrzeuge, mit einem Radiofrequenzsender, der mindestens eine Bedienungstaste aufweist und der ein codiertes Radiofrequenzsignal abhängig von der Betätigung der Bedientaste aussendet, mit einem Radiofrequenzempfänger, der das ausgesandte Radiofrequenzsignal empfängt und den darin enthaltenen Code mit einem im Radiofrequenzempfänger abgelegten Code vergleicht und der im Falle der Codeübereinstimmung ein Steuersignal an ein Steuergerät zur Steuerung von Sicherungsfunktionen des Kraftfahrzeuges ausgibt.

Derartige funkfernbedienbare Sicherungseinrichtungen sind zur Steuerung von Zentralverriegelungsanlagen und Diebstahlverhinderungsanlagen von Kraftfahrzeugen allgemein vorbekannt. Zur Steuerung dieser Sicherungseinrichtungen ist es nicht erforderlich, daß der Bediener des Kraftfahrzeuges direkt an das Kraftfahrzeug herantritt. Vielmehr ist es ihm durch die Funkfernbedienungsfunktion ermöglicht, durch Betätigung der Bedienungstaste an dem Radiofrequenzsender über größere Entfernungen zum Kraftfahrzeug hinweg die Sicherungsfunktionen des Kraftfahrzeuges zu steuern, insbesondere diese Sicherungsfunktionen aufzuheben.

Aus dieser den Bedienungskomfort des Kraftfahrzeuges grundsätzlich erhöhenden Möglichkeit funkfernbedienbarer Sicherungseinrichtungen ergibt sich jedoch ein besonderes Problem. Aufgrund der Verwendung eines Radiofrequenzsignals als Codeübertragungsmittel und aufgrund der sich daraus ergebenden physikalischen Übertragungsgesetze von Radiofrequenzsignalen ist mit derartigen funkfernbedienbaren Sicherungseinrichtungen die Steuerung der Sicherungsfunktionen des Kraftfahrzeuges ohne Sichtkontakt des Bedieners zum Kraftfahrzeug und ohne Sichtkontakt des Radiofrequenzsenders zum Kraftfahrzeug, in dem der Radiofrequenzempfänger eingebaut ist, möglich.

Durch diese Möglichkeit kann vom Bediener des Kraftfahrzeuges ungewollt die Sicherungsfunktion des Kraftfahrzeuges aufgehoben werden, wenn er z. B. den Radiofrequenzsender in einer Hosentasche bei sich führt und die Bedienungstaste ungewollt, z. B. beim Bücken nach einem Gegenstand, betätigt. Die Folge einer derartigen ungewollten Betätigung der Bedienungstaste des Radiofrequenzsenders wäre eine Aufhebung der Sicherungsfunktion, und damit beispielsweise eine Entriegelung des Kraftfahrzeuges im Falle der Zentralverriegelung als gesteuerter Sicherungsfunktion.

Diese ungewollte Entriegelung des Kraftfahrzeuges hätte wiederum die Folge, daß sich ein Unbefugter unbemerkt von dem Bediener des Kraftfahrzeuges, der sein Kraftfahrzeug ja nicht im Blick hat, Zugang zum Kraftfahrzeug verschaffen kann und im schlimmsten Falle das Kraftfahrzeug entwenden kann.

Die Erfindung hat die Aufgabe, eine funkfernbedienbare Sicherungseinrichtung für Kraftfahrzeuge zu schaffen, bei der ein ungewolltes Aufheben der Sicherungsfunktion weitgehend vermieden wird.

Diese Aufgabe wird erfindungsgemäß dadurch gelöst, daß das Steuergerät ein Zeitglied aufweist, das Signale von Bedienteilen des Kraftfahrzeuges empfängt und daß das Steuergerät nach Empfang eines Steuersignals vom Empfänger zur Aufhebung der Sicherungsfunktion die Sicherungsfunktion selbsttätig wiederherstellt, wenn innerhalb der durch das Zeitglied vorgegebenen Zeitdauer kein Signal von den Bedienteilen des Kraftfahrzeuges empfangen wird.

Der Erfindung liegt der Gedanke zugrunde, daß üblicherweise im Anschluß an die Aufhebung einer Sicherungsfunktion des Kraftfahrzeuges eine wie auch immer geartete Bedienung des Kraftfahrzeuges erfolgt. Das heißt, wenn der Bediener des Kraftfahrzeuges die Sicherungsfunktion aufhebt, möchte er sich üblicherweise Zugang zum Kraftfahrzeug verschaffen und das Kraftfahrzeug in Bewegung setzen. Hierzu ist es erforderlich, daß nach Aufhebung der Sicherungsfunktion der Bediener des Kraftfahrzeuges beispielsweise eine Kraftfahrzeugtür oder -haube öffnet, um in das Kraftfahrzeug zu gelangen und im Anschluß daran beispielsweise einen Anlaßschalter betätigt, um die Brennkraftmaschine des Kraftfahrzeuges anzulassen.

Dieser allgemein übliche Bedienungsablauf bei Kraftfahrzeugen wird bei der vorliegenden Erfindung ausgenutzt, indem den Bedienteilen des Kraftfahrzeuges, wie z. B. den Kraftfahrzeugtüren, Klappen oder dem Anlaßschalter, Signalgeber zugeordnet werden, deren Signale dem Steuergerät zugeleitet werden. Das Steuergerät weist dabei ein Zeitglied auf, das nach Aufhebung der Sicherungsfunktion eine Zeitdauer startet, in der die Signale von den Bedienteilen des Kraftfahrzeuges andeuten, daß der Bediener des Kraftfahrzeuges das Kraftfahrzeug tatsächlich bedient. Unterbleiben derartige Signale, so wird davon ausgegangen, daß die Aufhebung der Sicherungsfunktion ungewollt erfolgte, und das Steuergerät stellt die Sicherungsfunktion selbsttätig wieder her, um Manipulationen am oder im Kraftfahrzeug durch Unbefugte zu vermeiden.

Vorteilhafte Ausgestaltungen und Weiterbildungen der Erfindung ergeben sich aus den Unteransprüchen.

So kann das Steuergerät vorteilhaft die Zentralverriegelungsanlage eines Kraftfahrzeuges steuern. Ab der Mittelklasse weisen Kraftfahrzeuge heute üblicherweise derartige Zentralverriegelungsanlagen auf, die eine wichtige Diebstahlsicherungsfunktion erfüllen, da diese Zentralverriegelungsanlagen es nahezu ausschließen, daß die Verriegelung einer einzelnen Tür vergessen wird. Bei Anwendung der Erfindung auf derartige Zentralverriegelungsanlagen ergibt sich neben dem eingangs beschriebenen Bedienungskomfort noch der weitere Vorteil, daß ungewollte Betätigungen von Bedienungstasten nicht zu einem Risiko hinsichtlich des Diebstahls des Kraftfahrzeuges führen.

Derselbe Vorteil ergibt sich dann, wenn das Steuergerät die Diebstahlverhinderungsanlage eines Kraftfahrzeuges steuert. Derartige Diebstahlverhinderungsanlagen, die auch als Immobilizer bezeichnet werden, sollen zusätzlich zu einer Verriegelung des Kraftfahrzeuges einen Diebstahl des Kraftfahrzeuges verhindern. Derartige Diebstahlverhinderungsanlagen werden neuerdings von den Kraftfahrzeugversicherern gefordert.

Neben derartigen Sicherungsfunktionen kann das Steuergerät zur Steigerung des Bedienungskomforts zusätzlich eine Innenleuchtenverzögerungsschaltung des Kraftfahrzeuges steuern. Dies ermöglicht die Innenbeleuchtung des Kraftfahrzeuges ab Betätigung der Bedienungstaste des Radiofrequenzsenders, was dem Bediener des Kraftfahrzeuges möglicherweise den Zugang zum Kraftfahrzeug im unwegsamen Gelände oder in der dunklen Garage erleichtert.

Um einen möglichst guten Schutz, beispielsweise gegen Kraftfahrzeugdiebstähle, zu gewährleisten, sollte die Zeitdauer des Zeitgliedes möglichst weniger als eine Minute betragen. Untersuchungen haben in diesem Zusammenhang gezeigt, daß die Zeitdauer des Zeitgliedes besonders vorteilhaft etwa 10 Sekunden beträgt, da bei dem üblichen Bedienungsablauf von Kraftfahrzeugen der Bediener des Kraftfahrzeuges innerhalb von 10 Sekunden nach Betätigung der Bedienungstaste andere Bedienteile des Kraftfahrzeuges bereits bedient hat.

Die Signale von den Bedienteilen des Kraftfahrzeuges können, wie vorher bereits erläutert, besonders vorteilhaft Signale von den Türen oder Klappen zugeordneten Kontaktschaltern sein, deren Schaltzustand beim öffnen der Kraftfahrzeugtür oder -klappe wechselt. Diese Türkontaktschalter sind üblicherweise an den Kraftfahrzeugen vorhanden, so daß hier durch die Anwendung der Erfindung kaum Mehraufwand entsteht. Das Signal von den Bedienteilen des Kraftfahrzeuges kann auch das Signal eines Anlaßschalters oder Zündanlaßschalters des Kraftfahrzeuges sein, das bei Betätigung des Anlassers wechselt. Hier wird davon ausgegangen, daß der Bediener des Kraftfahrzeuges nicht nur den Kraftfahrzeuginnenraum betritt, sondern auch mit dem Kraftfahrzeug fahren will.

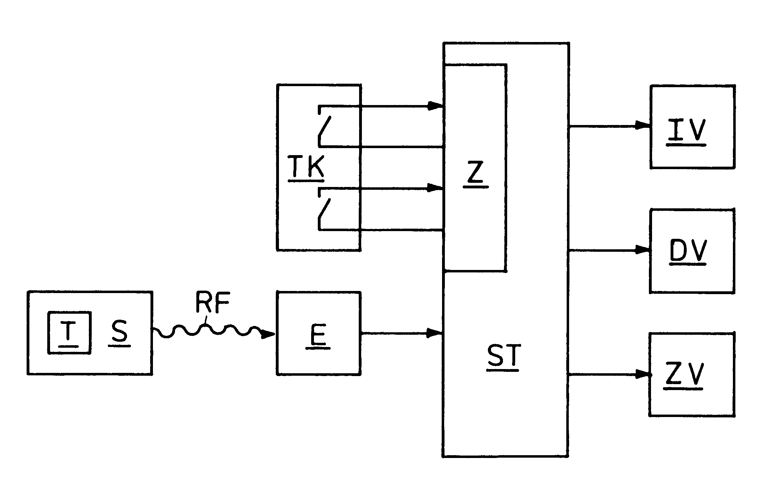

Ein Ausführungsbeispiel der funkfernbedienbaren Sicherungseinrichtung ist in der Zeichnung dargestellt und wird im folgenden anhand der Zeichnung näher erläutert.

Die einzige Figur zeigt grob schematisch eine funkfernbedienbare Sicherungseinrichtung nach der Erfindung. Diese funkfernbedienbare Sicherungseinrichtung weist einen Radiofrequenzsender (S) auf, der eine Bedienungstaste (T) aufweist. Der Radiofrequenzsender (S) sendet bei Betätigung der Bedienungstaste (T) ein codiertes Radiofrequenzsignal (RF) aus. Innerhalb des Kraftfahrzeuges, das in der Figur nicht dargestellt ist, ist ein Radiofrequenzempfänger (E) angeordnet. Dieser Radiofrequenzempfänger (E) empfängt das vom Radiofrequenzsender (S) ausgesandte Radiofrequenzsignal (RF) und vergleicht den darin enthaltenen Code mit einem im Radiofrequenzempfänger (E) abgelegten Code. Ergibt dieser Codevergleich Identität zwischen den beiden Codes oder Codeübereinstimmung, so gibt der Radiofrequenzempfänger (E) ein Steuersignal an ein Steuergerät (ST) zur Steuerung von Sicherungsfunktionen des Kraftfahrzeuges.

Als Sicherungsfunktionen des Kraftfahrzeuges werden im vorliegenden Ausführungsbeispiel durch das Steuergerät (ST) eine Zentralverriegelungsanlage (ZV) und eine Diebstahlverhinderungsanlage (DV) gesteuert. Zusätzlich steuert das Steuergerät (ST) ein Innenleuchtenverzögerungsgerät (IV), so daß beim Durchführen eines Entriegelungsbefehls für die Zentralverriegelungsanlage auch die Innenbeleuchtung des Kraftfahrzeuges eingeschaltet wird.

Zusätzlich und gemäß der Erfindung weist das Steuergerät (ST) ein Zeitglied (Z) auf, das Signale von Bedienteilen des Kraftfahrzeuges empfängt. In dem konkreten Ausführungsbeispiel empfängt das Zeitglied (Z) die Signale zweier Türkontaktschalter (TK), die geschlossen werden, wenn die zugehörigen Kraftfahrzeugtüren geöffnet werden.

Zur Erläuterung des Funktionsablaufes der in der Figur dargestellten funkfernbedienbaren Sicherungseinrichtung sei davon ausgegangen, daß zu Beginn die Sicherungsfunktionen des Kraftfahrzeuges eingeschaltet sind. Das heißt, über die Zentralverriegelungsanlage (ZV) sind die Kraftfahrzeugtüren und -klappen verriegelt. Über die Diebstahlverhinderungsanlage (DV) sind funktionswichtige Teile des Kraftfahrzeuges, wie z. B. der Anlaßer, die Zündung oder die Benzineinspritzung, unwirksam geschaltet. Die Innenbeleuchtung ist ebenfalls ausgeschaltet.

Sobald nun der Bediener des Kraftfahrzeuges die Bedienungstaste (T) des Radiofrequenzsenders (S) betätigt, sendet der Radiofrequenzsender (S) das Radiofrequenzsignal (RF) an den Radiofrequenzempfänger (E). Nachdem die Codeübereinstimmung festgestellt wurde, gibt der Radiofrequenzempfänger (E) das Steuersignal an das Steuergerät (ST), das daraufhin die Zentralverriegelungsanlage (ZV) im Sinne einer Entriegelung der Kraftfahrzeugtüren und -klappen ansteuert und die Diebstahlverhinderungsanlage (DV) im Sinne einer Aktivierung der vorgenannten Komponenten ansteuert. Zugleich wird die Innenbeleuchtung des Kraftfahrzeuges über das Innenleuchtenverzögerungsgerät (IV) eingeschaltet.

Mit dem Empfang des Steuersignales durch das Steuergerät (ST) wird das Zeitglied (Z) des Steuergerätes (ST) aktiviert und die Zeitdauer des Zeitgliedes (Z) beginnt zu laufen. Sofern innerhalb der Zeitdauer des Zeitgliedes (Z) eine der Kraftfahrzeugtüren geöffnet wird, so daß sich einer oder mehrere der Türkontaktschalter (TK) schließen, bleibt das steuergerät (ST) unwirksam, da von einem normalen Bedienungsablauf am Kraftfahrzeug durch den befugten Benutzer des Kraftfahrzeuges ausgegangen wird.

Falls jedoch innerhalb der durch das Zeitglied (Z) vorgegebenen Zeitdauer kein Schließen eines Türkontaktschalters registriert wird, so wird durch das Steuergerät (ST) nach Ablauf der durch das Zeitglied (Z) vorgegebenen Zeitdauer die Sicherungsfunktion selbsttätig wieder hergestellt.

Das heißt, das Steuergerät (ST) steuert nach Ablauf dieser Zeitdauer die Zentralverriegelungsanlage (ZV) im Sinne einer Verriegelung der Kraftfahrzeugtüren an. Zugleich steuert das Steuergerät (ST) die Diebstahlverhinderungsanlage im Sinne einer Blockierung der funktionswichtigen Komponenten des Kraftfahrzeuges, wie beispielsweise der Zündung der Brennkraftmaschine, an ebenfalls wird über das Innenleuchtenverzögerungsgerät (IV) die Innenbeleuchtung des Kraftfahrzeuges unabhängig von einer durch das Innenleuchtenverzögerungsgerät (IV) vorgegebenen Zeitdauer wieder ausgeschaltet. In diesem Fall wird also von einer ungewollten Aufhebung der Sicherungsfunktionen des Kraftfahrzeuges durch den Bediener ausgegangen und die Sicherungsfunktionen voll wiederhergestellt, um einen Diebstahl von Teilen aus dem Kraftfahrzeug heraus oder des Kraftfahrzeuges selbst zu vermeiden.

### Bezugszeichenliste

- T: Bedienungstaste
- S: Radiofrequenzsender
- RF: Radiofrequenzsignal
- E: Radiofrequenzempfänger
- ST: Steuergerät
- TK: Türkontaktschalter
- Z: Zeitglied
- IV: Innenleuchtenverzögerungsgerät
- DV: Diebstahlverhinderungsanlage
- ZV: Zentralverriegelungsanlage

## Patentansprüche

1. Funkfernbedienbare Sicherungseinrichtung für Kraftfahrzeuge, mit einem Radiofrequenzsender (S), der mindestens eine Bedienungstaste (T) aufweist und der ein codiertes Radiofrequenzsignal (RF) abhängig von der Betätigung der Bedienungstaste (T) aussendet, mit einem Radiofrequenzempfänger (E), der das ausgesandte Radiofrequenzsignal empfängt und den darin enthaltenen Code mit einem im Radiofrequenzempfänger (E) abgelegten Code vergleicht und der im Falle der Codeübereinstimmung ein Steuersignal an ein Steuergerät (ST) zur Steuerung von Sicherungsfunktionen des Kraftfahrzeuges ausgibt, dadurch gekennzeichnet, daß das steuergerät (ST) ein Zeitglied (Z) aufweist, das Signale von Bedienteilen des Kraftfahrzeuges empfängt, und daß das Steuergerät (ST) nach Empfang eines Steuersignals vom Empfänger (E) zur Aufhebung der Sicherungsfunktion die Sicherungsfunktion selbsttätig wiederherstellt, wenn innerhalb der durch das Zeitglied (Z) vorgegebenen Zeitdauer kein Signal von den Bedienteilen des Kraftfahrzeuges empfangen wird.

2. Funkfernbedienbare Sicherungseinrichtung nach Anspruch 1, dadurch gekennzeichnet, daß das Steuergerät (ST) die Zentralverriegelungsanlage (ZV) des Kraftfahrzeuges steuert.

3. Funkfernbedienbare Sicherungseinrichtung nach Anspruch 1, dadurch gekennzeichnet, daß das Steuergerät (ST) die Diebstahlverhinderungsanlage (DV) des Kraftfahrzeuges steuert.

4. Funkfernbedienbare Sicherungseinrichtung nach Anspruch 1, dadurch gekennzeichnet, daß das Steuergerät (ST) zusätzlich ein Innenleuchtenverzögerungsgerät (IV) des Kraftfahrzeuges steuert.

5. Funkfernbedienbare Sicherungseinrichtung nach Anspruch 1, dadurch gekennzeichnet, daß die Zeitdauer des Zeitgliedes (Z) weniger als eine Minute beträgt.

6. Funkfernbedienbare Sicherungseinrichtung nach Anspruch 5, dadurch gekennzeichnet, daß die Zeitdauer des Zeitgliedes (Z) etwa 10 Sekunden beträgt.

7. Funkfernbedienbare Sicherungseinrichtung nach Anspruch 1, dadurch gekennzeichnet, daß die Signale von den Bedienteilen des Kraftfahrzeuges Signale von den Türen oder Klappen zugeordneten Kontaktschaltern (TK) sind, deren Schaltzustand beim Öffnen einer Kraftfahrzeugtür wechselt.

8. Funkfernbedienbare Sicherungseinrichtung nach Anspruch 1, dadurch gekennzeichnet, daß das Signal von dem Bedienteil des Kraftfahrzeuges das Signal eines Anlaßschalters ist, dessen Schaltzustand bei Betätigung des Anlassers wechselt.
